(19) Europäisches Patentamt
European Patent Office
Office européen des brevets

(11) **EP 1 949 143 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **06818510.7**

(22) Anmeldetag: **14.11.2006**

(51) Int Cl.:
*G01V 8/20* (2006.01)      *G01S 17/87* (2006.01)
*G01S 7/497* (2006.01)      *G01C 3/08* (2006.01)
*F16P 3/14* (2006.01)      *G01S 17/89* (2006.01)

(86) Internationale Anmeldenummer:
**PCT/EP2006/010886**

(87) Internationale Veröffentlichungsnummer:
**WO 2007/054359 (18.05.2007 Gazette 2007/20)**

(54) **VORRICHTUNG UND VERFAHREN ZUM ÜBERWACHEN EINES RAUMBEREICHS, INSBESONDERE ZUM ABSICHERN EINES GEFAHRENBEREICHS EINER AUTOMATISIERT ARBEITENDEN ANLAGE**

APPARATUS AND METHOD FOR MONITORING A ZONE OF A ROOM, PARTICULARLY FOR SECURING A HAZARD AREA OF AN AUTOMATICALLY OPERATING SYSTEM

DISPOSITIF ET PROCEDE POUR SURVEILLER UNE ZONE DE L'ESPACE, EN PARTICULIER POUR SECURISER UNE ZONE A RISQUES D'UNE INSTALLATION AUTOMATISEE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.11.2005 DE 102005056265**

(43) Veröffentlichungstag der Anmeldung:
**30.07.2008 Patentblatt 2008/31**

(73) Patentinhaber: **Pilz GmbH & Co. KG**
**73760 Ostfildern (DE)**

(72) Erfinder:
• **FUCHS, Oliver**
**73760 Ostfildern (DE)**
• **WENDLER, Martin**
**70599 Stuttgart (DE)**
• **DOETTLING, Dietmar**
**70771 Leinfelden-Echterdingen (DE)**

(74) Vertreter: **Witte, Weller & Partner Patentanwälte mbB**
**Postfach 10 54 62**
**70047 Stuttgart (DE)**

(56) Entgegenhaltungen:
EP-A- 1 544 535          EP-A1- 0 885 782
WO-A-2004/055544          DE-A1- 10 238 075
DE-A1-102004 037 137          US-A- 4 716 430

## Beschreibung

Die vorliegende Erfindung betrifft eine Vorrichtung zum Überwachen eines Raumbereichs, insbesondere zum Absichern eines Gefahrenbereichs einer automatisiert arbeitenden Anlage, mit einer Beleuchtungseinrichtung, die zumindest temporär Lichtsignale in den Raumbereich aussendet, mit einer ersten Bildaufnahmeeinheit zum Aufnehmen von zumindest einem ersten Abbild des Raumbereichs, wobei die Bildaufnahmeeinheit einen Bildsensor mit einer Vielzahl von Bildpunkten besitzt, die eine Vielzahl von Raumbereichspunkten abbilden, mit einer Auswerteeinheit, die dazu ausgebildet ist, mittels Laufzeitmessung einen Abstandswert für zumindest einen der Raumbereichspunkte zu bestimmen, und einer Steuereinheit, die in Abhängigkeit von dem Abstandswert eine Sicherheitsfunktion auslöst, und mit einer Prüfeinrichtung, die dazu ausgebildet ist, mindestens ein erstes und ein zweites Abbild miteinander zu vergleichen, um einen fehlerhaften Abstandswert zu erkennen.

Die Erfindung betrifft ferner ein Verfahren zum Überwachen eines Raumbereichs, insbesondere zum Absichern eines Gefahrenbereichs einer automatisiert arbeitenden Anlage, wobei eine Beleuchtungseinrichtung zumindest temporär Lichtsignale in den Raumbereich aussendet, eine Bildaufnahmeeinheit mit einem Bildsensor mit einer Vielzahl von Bildpunkten ein Abbild des Raumbereichs aufnimmt, mittels Laufzeitmessung einen Abstandswert für mindestens einen im Raumbereich befindlichen Raumbereichspunkt bestimmt und in Abhängigkeit von dem Abstandswert eine Sicherheitsfunktion ausgelöst wird, wobei mindestens ein erstes und ein zweites Abbild aufgenommen und miteinander verglichen werden, um einen fehlerhaften Abstandswert zu erkennen.

Eine solche Vorrichtung und ein solches Verfahren sind aus EP 1 544 535 A1 bekannt.

Zur Absicherung eines Gefahrenbereichs einer automatisiert arbeitenden Anlage, wie beispielsweise automatisiert arbeitenden Robotern, Pressenstraßen, Transportbändern, werden häufig mechanischen Absperrungen und auch bereits seit langem Lichtschranken und Lichtgitter verwendet. Diese bilden einen "Lichtzaun" vor der abzusichernden Anlage. Tritt jemand durch den Lichtzaun hindurch, wird dies von einer Auswerteeinheit erkannt und an eine Steuereinheit gemeldet. Diese löst daraufhin eine Sicherheitsfunktion aus, indem sie beispielsweise die überwachte Anlage abschaltet oder anderweitig in einen ungefährlichen Zustand bringt. Darüber hinaus kann auch eine Warnmeldung, ein Alarmsignal oder dergleichen ausgelöst werden.

Für diesen Zweck haben sich Lichtschranken in der Praxis seit langem bewährt. Sie haben jedoch einige Nachteile. Beispielsweise ist die Montage von Lichtschranken vergleichsweise aufwendig, da die voneinander entfernt stehenden Sender und Empfänger exakt justiert sein müssen. Darüber hinaus kann mit einer Lichtschranke nur ein gerader "Zaunverlauf" realisiert werden.

Um einen Gefahrenbereich einer Anlage an mehreren Seiten oder entlang eines gekrümmten Grenzverlaufs abzusichern, sind mehrere Lichtschranken- oder Lichtgittersysteme erforderlich. Ferner ist zu beachten, dass für eine sichere Detektion von kleinen Objekten eine Vielzahl an Lichtquellen und Sensoren notwendig wird.

Um diesen Nachteilen zu begegnen, gibt es seit einiger Zeit Bestrebungen, Gefahrenbereiche von automatisiert arbeitenden Anlagen mit Hilfe von Bildaufnahme- und Bildauswertevorrichtungen abzusichern. Dabei wird mit einer Bildaufnahmeeinheit (häufig einfach als Kamera bezeichnet) ein Raumbereich optisch überwacht. Die aufgenommenen Bilder werden automatisch und möglichst in Echtzeit ausgewertet, um eine Gefahrensituation, wie beispielsweise das Eindringen einer Person in den Gefahrenbereich der Anlage, zu detektieren.

In diesem Sinne wird in der DE 199 38 639 A1 eine optische Schranke vorgeschlagen, die sich zwischen einem definierten Ziel und einer Bildaufnahmeeinheit, die das Ziel abbildet, erstreckt. In einer Vergleichseinheit ist ein Referenzbild gespeichert, welches sich ergibt, wenn die Bildaufnahmeeinheit freie Sicht auf das definierte Ziel hat. Gelangt nun ein Gegenstand zwischen die Bildaufnahmeeinheit und das Ziel, erkennt die Vergleichseinheit einen Unterschied zwischen dem aktuellen Bild und dem gespeicherten Referenzbild. Aus dieser Abweichung wird auf das Eindringen eines Gegenstands geschlossen und beispielsweise eine in dem Gefahrenbereich arbeitende Maschine angehalten. Dieses Vorgehen reduziert bereits den Aufwand bei ausgedehnten oder komplex geformten Gefahrenbereichen im Vergleich zu herkömmlichen Lichtschranken und Lichtgittern. Die Absicherung erfolgt allerdings immer noch mit einem weitgehend starren "Zaun", d.h. eine dynamische Grenze um den Gefahrenbereich ist nur begrenzt möglich.

In der DE 100 33 608 A1 wurde vorgeschlagen, ein künstliches Ziel in Form eines definierten Lichtsignals zu verwenden, das mittels einer Lichtquelle erzeugt wird. Dabei wird das Lichtsignal auf einen Gegenstand oder auf einen Hintergrund projiziert. Eine Bildaufnahmeeinheit, die auf das künstliche Ziel ausgerichtet ist, bildet das Ziel ab. Auch hier wird dann in einer Vergleichseinheit das aktuelle Abbild mit einem Referenzbild verglichen und es werden bei einer Abweichung Sicherungsmaßnahmen getroffen.

Die WO 99/34235 offenbart ein Verfahren und eine Vorrichtung zur Aufnahme eines dreidimensionalen Abstandsbildes. Dabei ist eine Bildaufnahmeeinheit auf einen Raumbereich ausgerichtet. Der Raumbereich wird mit mindestens einem Lichtimpuls mit vorgegebener Zeitdauer beleuchtet. Objekte, die sich im Raumbereich befinden, reflektieren die Lichtimpulse zur Bildaufnahmeeinheit. Aus den unterschiedlichen Laufzeiten resultieren unterschiedliche Intensitäten der reflektierten Lichtimpulse, und aus diesen werden dann Abstandswerte zu den Objekten ermittelt. Anhand bekannter Referenzabstandswerte kann dann festgestellt werden, ob in den Raumbereich ein weiteres Objekt eingedrungen ist. Diese Vorrichtung und das Verfahren sind jedoch nicht zum Absichern von automatisiert arbeitenden Anlagen geeignet, da die Bestimmung der Abstandswerte mit Fehlern behaftet sein kann, die nicht erkannt werden.

In WO 2004/029502 A1 wird vorgeschlagen, den zu überwachenden Raumbereich mittels zweier Bildaufnahmeeinheiten stereoskopisch aufzunehmen. Das Abbild der ersten Bildaufnahmeeinheit und das Abbild der zweiten Bildaufnahmeeinheit werden unter Verwendung zweier algorithmisch unterschiedlicher Verfahren zur dreidimensionalen Szenenanalyse ausgewertet. Führt zumindest eines der Verfahren zu dem Ergebnis, dass sich ein Gegenstand in dem Gefahrenbereich befindet, so wird die überwachte Anlage abgeschaltet. Verfahren zur dreidimensionalen Szenenanalyse sind allerdings sehr rechenintensiv, was eine Echtzeitrealisierung aufwendig und teuer macht.

In DE 42 17 423 A1 und in der eingangs genannten EP 1 065 522 B1 sind Laufzeitmessverfahren zur Auswertung von Abbildern eines Raumbereichs vorgeschlagen. Diese haben gegenüber Triangulationsverfahren mit zwei oder mehr Bildaufnahmeeinheiten den generellen Vorteil, dass nur eine Bildaufnahmeeinheit benötigt wird und dass keine Schattenwürfe und damit keine unvollständigen Messungen entstehen, da Sender und Empfänger kollinear angeordnet werden können. Nachteilig an diesen Verfahren ist, dass auf Grund der extrem kurzen Laufzeiten der Lichtwelle sehr hohe Anforderungen an die Stabilität der Laufzeiten in den zugehörigen elektronischen Schaltungen zu stellen sind und Veränderungen der elektrischen Laufzeiten, beispielsweise durch Temperatureinflüsse und Alterung, durch ständige Eichung berücksichtigt werden müssen. Wird der Laufzeitunterschied durch einen Helligkeitsunterschied gemessen, hat eine Änderung der tatsächlichen Pixel-Kennlinie gegenüber der hinterlegten Pixel-Kennlinie einen erheblichen Einfluss auf den gemessenen Abstandswert. Da der Abstandswert aber von großer Bedeutung für die Erkennung eines Objektes ist, hat eine Drift in der Pixel-Kennlinie erhebliche Auswirkungen.

Ein für die sicherheitstechnische Anwendung wichtiger Aspekt, der hier keine Beachtung gefunden hat, ist die Tatsache, dass die Phasenverschiebungen oder Pulslaufzeiten, auf der die Laufzeitverfahren basieren, nur innerhalb bestimmter Grenzen eindeutig sind. Beim Pulslaufzeitverfahren wird die Amplitude der Lichtwelle pulsförmig mit einem großen Puls-/Pausenverhältnis moduliert, also bei niedriger Modulationsfrequenz. Hierbei wird die Zeit ermittelt, die zwischen dem Aussenden und der Rückkehr des Lichtsignals vom reflektierenden Objekt vergangen ist. Es ist hier grundsätzlich möglich, dass ein weit entferntes Objekt eine Reflexion erzeugt, die erst in einem späteren Messintervall empfangen wird. Diese Reflexion wird dann einem kürzeren Abstandswert fälschlicherweise zugeordnet. Beim Phasenlaufzeitverfahren wird die Amplitude der Lichtwelle mit einer Frequenz im Hochfrequenzbereich moduliert. Die Laufzeitbestimmung des Messsignals erfolgt aus dem Phasenvergleich der Modulation der ausgesendeten Lichtwelle und der Modulation der einlaufenden Lichtwelle. Auch hier ist es aufgrund der maximalen Phasenunterschiede von 360° möglich, dass ein weit entferntes Objekt eine Reflexion erzeugt, die einem näheren Raumpunkt zugeordnet wird. Mit anderen Worten gibt es bei allen Laufzeitmessungen Mehrdeutigkeiten, die eine sichere Abstandsbestimmung gefährden.

Eine korrekte Abstandsbestimmung ist insbesondere bei sogenannten Retroreflektoren kritisch. Wird Licht von einem solchen Retroreflektor zur Bildaufnahmeeinheit zurückreflektiert, kann dies einerseits dazu führen, dass die Anlage abgeschaltet wird, obwohl keine Gefahrensituation vorliegt. Andererseits kann dies im ungünstigen Fall sogar dazu führen, dass eine notwendige Abschaltung nicht oder nicht rechtzeitig erfolgt.

Die eingangs genannte EP 1 544 535 A1 offenbart eine Vorrichtung zur Überwachung eines Bereichs an einer Maschine. Die Vorrichtung besitzt eine Beleuchtungseinheit und eine Kamera, die anhand der Lichtlaufzeit Distanzwerte ermittelt. Für den Einsatz der Vorrichtung im Bereich des Personenschutzes besitzt die Vorrichtung eine Auswerteeinheit mit einem redundanten, zweikanaligen Aufbau. Im Gegensatz dazu besitzt die Sensoreinheit mit der Kamera einen einkanaligen Aufbau. Zur Durchführung einer Eigenfehlerkontrolle wird in vorgegebenen Zeitabständen die Aussendung eines Sendelichtimpulses verzögert oder die Phase der den Lichtstrahlen aufgeprägten Amplitudenmodulation verschoben und die dadurch bewirkte Veränderung der Distanzmessung wird für einzelne Empfangselemente der Kamera überwacht.

WO 2004/055544 A1 offenbart ein Verfahren zur Kalibrierung von 3D-Bildaufnehmern, wobei das komplette Empfangsarray zu definierten Zeiten exklusiv mit einer modulierbaren Lichtquelle beleuchtet wird. Durch zwei Kalibriermessungen mit unterschiedlicher Phasenbeziehung zwischen Sende- und Empfängersignal können unterschiedliche Entfernungen simuliert und entfernungsabhängige Pixelfehler individuell erkannt werden.

DE 102 38 075 A1 offenbart einen optischen Sensor zur Erfassung von Objekten in einem Überwachungsbereich mit zwei im Abstand voneinander angeordneten Lichtsendern und zwei Empfängerzeilen. Jeweils eine Empfängerzeile ist einem der Sender zur Durchführung einer Distanzmessung zugeordnet. Durch Vergleich der Amplituden der Ausgangssignale der beiden Empfänger können Inhomogenitäten der Objektoberfläche erfasst werden. Zur Minimierung von Störeinflüssen wird vorzugsweise nur die Empfängerzeile zur Distanzmessung herangezogen, welche die Ausgangssignale mit den höheren Amplitudenwerten liefert.

EP 0 885 782 A1 offenbart eine Vorrichtung zur Detektion der Anwesenheit eines Insassen in einem Kraftfahrzeug. Die Vorrichtung besitzt zwei Kameras (zum Aufnehmen eines ersten und eines zweiten Bildes). Eine Auswerteeinheit bestimmt die Entfernung und Größe eines Objekts auf dem Fahrzeugsitz anhand der Kamerabilder.

US 4,716,430 offenbart eine weitere Vorrichtung zum Bestimmen einer Entfernung für eine Objektoberfläche anhand eines Lichtlaufzeitverfahrens.

Vor diesem Hintergrund ist es eine Aufgabe der vorliegenden Erfindung, eine kostengünstige Vorrichtung und ein Verfahren zum Absichern des Gefahrenbereichs einer automatisiert arbeitenden Anlage anzugeben. Insbesondere soll mit geringem Aufwand eine erhöhte Fehlersicherheit bei der Abstandsermittlung mittels Laufzeitmessung erreicht werden.

Diese Aufgabe wird nach einem Aspekt der Erfindung mit einer Vorrichtung nach Anspruch 1 gelöst.

Die Aufgabe der Erfindung wird außerdem mit einem Verfahren nach Anspruch 7 gelöst.

Eine Besonderheit der Erfindung ist darin zu sehen, dass von einem zu überwachenden Raumbereich mindestens ein erstes und ein zweites Abbild aufgenommen werden, wobei zumindest das erste Abbild Abstandsinformationen enthält, die mittels eines Laufzeitverfahrens bestimmt wurden. In einer Prüfeinrichtung wird dann für alle oder für einen Teil der aufgenommenen Raumbereichspunkte ermittelt, ob der im ersten Abbild für den jeweiligen Raumbereichspunkt ermittelte (erste) Abstandswert mit einem anhand des zweiten Abbildes ermittelten (zweiten) Abstandswert für denselben Raumbereichspunkt innerhalb eines vorgegebenen Toleranzbereichs übereinstimmt. Mit anderen Worten beinhaltet die vorliegende Erfindung also eine Überprüfung des aus der Laufzeitinformation erhaltenen (ersten) Abstandswertes anhand eines zweiten Abbildes und einer darauf gestützten zweiten Abstandsbestimmung für denselben Raumbereichspunkt. Bei fehlender Übereinstimmung wird eine Fehlerbehandlung eingeleitet und vorteilhafterweise wird eine Sicherheitsfunktion ausgelöst und insbesondere eine überwachte Maschine abgeschaltet. Wird hingegen eine Übereinstimmung festgestellt, liegt eine korrekte Abstandsmessung vor, die weiter ausgewertet werden kann. Ergibt die Auswertung, dass sich ein Objekt in einem Bereich befindet, der als Schutzraum definiert wurde und nicht verletzt werden darf, reagiert die Steuereinheit darauf mit der Sicherheitsfunktion, beispielsweise einem Abschalten der Anlage. Auf diese Weise ist es möglich, eine kostengünstige Vorrichtung und ein entsprechendes Verfahren auf dem Prinzip der Laufzeitmessung aufzubauen und gleichzeitig eine erhöhte Funktionssicherheit zu gewährleisten. Insbesondere ist es auf diese Weise möglich, Mehrdeutigkeiten, die aus der Laufzeitmessung resultieren, aufzulösen, um den tatsächlichen Abstand eines Raumpunktes fehlersicher zu ermitteln.

Da die Vorrichtung eine zweite Bildaufnahmeeinheit zur Erzeugung des zweiten Abbilds aufweist, können das erste und das zweite Abbild zeitgleich aufgenommen werden, und es lässt sich eine höhere Verarbeitungsgeschwindigkeit erzielen. Außerdem ermöglicht eine solche Ausgestaltung eine Abstandsbestimmung anhand des zweiten Abbildes mittels eines Triangulationsverfahrens, wodurch sich Mehrdeutigkeiten der Laufzeitmessung sehr sicher erkennen und auflösen lassen.

Damit ist die oben genannte Aufgabe vollständig gelöst.

Es sei darauf hingewiesen, dass der Begriff "Bild", wie zum Beispiel in Bildsensor, Bildpunkt oder Bildaufnahmeeinheit nicht nur im Sinne einer Wahrnehmung durch das menschliche Auge zu verstehen ist. Am Beispiel des Bildsensors bedeutet dies, dass der Bildsensor zusätzlich zu oder statt der Erfassung von Intensitäten (Helligkeiten) und der Ausgabe von Grauwerten, Abstandsinformationen oder Laufzeitinformationen erfasst und so ein auf diesen Informationen basierendes Abbild (Abstandsbild, Laufzeitbild) entstehen kann.

In einer Ausgestaltung der Erfindung ist die Prüfeinrichtung zum Korrigieren eines fehlerhaften Abstandswertes und/oder zum Generieren eines Fehlersignals ausgebildet.

Wenn für einen Raumbereichspunkt keine übereinstimmenden Ergebnisse hinsichtlich des Abstandswertes erzielt wurden, kann dies die Folge einer Mehrdeutigkeit der laufzeitbasierten Abstandsmessung oder die Folge eines Funktionsfehlers sein. Vorteilhafterweise wird in dieser Ausgestaltung versucht, die Ursache der voneinander abweichenden Abstandswerte zu finden und eine aufgrund Mehrdeutigkeit fehlende Übereinstimmung aufzulösen, um eine unnötige Abschaltung der Anlage zu vermeiden. Die Ausgestaltung besitzt damit den Vorteil, dass die überwachte Anlage bei gleicher oder sogar höherer Sicherheit produktiver arbeiten kann.

Bei einem Pulslaufzeitverfahren ist der Eindeutigkeitsbereich durch die Strecke definiert, die das Licht innerhalb der halben Zeit (es sind Hin- und Rückweg zu berücksichtigen) des zeitlichen Abstands zwischen den einzelnen Pulsen zurücklegt. Bei einem Phasenlaufzeitverfahren ist der Eindeutigkeitsbereich durch die halbe Länge (es sind wiederum Hin- und Rückweg zu beachten) der Strecke definiert, entlang derer die Lichtwelle eine Phasenänderung von höchstens 360° erfährt. Basierend auf dieser Erkenntnis kann eine Mehrdeutigkeit mit Hilfe eines Suchprozesses sehr einfach aufgelöst werden, indem überprüft wird, ob sich übereinstimmende Abstandswerte ergeben, wenn der Raumbereichspunkt um eine Entfernung, die dem Eindeutigkeitsbereich entspricht, weiter entfernt angenommen wird. Unter Berücksichtigung dieser Erkenntnisse versucht die Prüfeinrichtung nun - unter der Annahme, dass sich der Raumbereichspunkt außerhalb des Eindeutigkeitsbereichs befindet - einen übereinstimmenden Abstandswert zu ermitteln. Ist dies möglich, so kann davon ausgegangen werden, dass der tatsächliche Abstandswert gefunden wurde, obwohl er sich außerhalb des Eindeutigkeitsbereichs befindet. Lässt sich auch unter Berücksichtigung von Mehrdeutigkeiten keine Übereinstimmung finden, so wird von einem Funktionsfehler ausgegangen. In diesem Fall kann dann ein Fehlersignal von der Prüfeinrichtung generiert werden.

In einer weiteren Ausgestaltung beinhaltet die Vorrichtung eine Modulationseinrichtung, die dazu ausgebildet ist, die Lichtsignale mit zumindest einer ersten und einer davon verschiedenen zweiten Modulationsfrequenz zu modulieren. Vorteilhafterweise wird das erste Abbild beim Aussenden von Licht mit der ersten Modulationsfrequenz aufgenommen und das zweite Abbild wird beim Aussenden von Licht mit der zweiten Modulationsfrequenz aufgenommen.

Für unterschiedliche Modulationsfrequenzen ergeben sich unterschiedliche Eindeutigkeitsbereiche. Wenn die Modulationsfrequenzen so gewählt werden, dass die resultierenden Eindeutigkeitsbereiche nicht im Verhältnis eines ganzzahligen Vielfachen zueinander stehen, lassen sich potenzielle Mehrdeutigkeiten sehr einfach auflösen. Die erste Modulationsfrequenz wird vorzugsweise zwischen 10 MHz und 20 MHz, bevorzugt zwischen 13 MHz und 17 MHz, insbesondere bei etwa 15 MHz gewählt. Die zweite Modulationsfrequenz wird vorzugsweise zwischen 8 MHz und 18 MHz, bevorzugt zwischen 11 MHz und 15 MHz und insbesondere bei etwa 13 MHz gewählt.

Es ist ferner vorteilhaft, wenn die erste und die zweite Bildaufnahmeeinheit um eine definierte Basisweite parallel zueinander versetzt sind, insbesondere zur Erzeugung von stereoskopischen Abbildern.

In dieser Ausgestaltung besteht eine definierte geometrische Beziehung zwischen den beiden Bildaufnahmeeinheiten, so dass die beiden Abbilder, genauer gesagt die in den Abbildern dargestellten Raumbereichspunkte, gut miteinander korreliert werden können. Dies ermöglicht eine relativ einfache Bestimmung eines zweiten Abstandswertes für den betrachteten Raumpunkt. Aufgrund der diversitären Vorgehensweise bietet diese Ausgestaltung eine besonders hohe Fehlersicherheit.

In einer weiteren Ausgestaltung weist die Vorrichtung mindestens einen Strahlteiler zum Aufteilen der von dem Raumbereichspunkt reflektierten Lichtsignale an die erste und zweite Bildaufnahmeeinheit auf.

Diese Anordnung bewirkt, dass beide Bildaufnahmeeinheiten denselben Blickpunkt und dieselbe Blickrichtung auf den zu überwachenden Raumbereich haben. Dadurch wird jeder Raumbereichspunkt jeweils an der gleichen Position im ersten Abbild und im zweiten Abbild dargestellt. Eine Korrelation von Raumbereichspunkten im ersten und zweiten Abbild ist daher besonders einfach. Außerdem werden Schatteneffekte vermieden, d.h. beide Bildaufnahmeeinheiten können den gesamten überwachten Raumbereich sehen.

In einer weiteren Ausgestaltung der Erfindung ist die Beleuchtungseinrichtung zum Aussenden von Licht mit mindestens zwei Wellenlängen ausgebildet. Ferner ist der ersten Bildaufnahmeeinheit ein erstes optisches Filterelement mit einer ersten Durchlasswellenlänge und der zweiten Bildaufnahmeeinheit ein zweites optisches Filterelement mit einer zweiten Durchlasswellenlänge zugeordnet, wobei die erste Durchlasswellenlänge im Wesentlichen der ersten Wellenlänge des ausgesendeten Lichts und die zweite Durchlasswellenlänge im Wesentlichen der zweiten Wellenlänge des ausgesendeten Lichts entspricht.

Somit ist es möglich, dass die Beleuchtungseinrichtung gleichzeitig Licht mit zwei Wellenlängen aussenden kann, dass aber dennoch jede Bildaufnahmeeinheit stets nur Bildinformationen auf Grund einer der Wellenlängen aufnimmt. Mehrdeutigkeiten der Laufzeitmessung können dadurch sehr einfach aufgelöst werden, indem jede der beiden Wellenlängen mit einer unterschiedlichen Modulationsfrequenz gesendet wird. Statt der Filterelemente kann auch ein wellenlängenselektiver Strahlteiler verwendet werden, der Licht mit der ersten Wellenlänge zur ersten Bildaufnahmeeinheit und Licht mit der zweiten Wellenlänge zur zweiten Bildaufnahmeeinheit leitet.

In einer weiteren Ausgestaltung der Erfindung werden für mindestens einen ersten Bildpunkt der ersten Bildaufnahmeeinheit und einen zweiten Bildpunkt der zweiten Bildaufnahmeeinheit Grauwerte aufgenommen und verglichen.

Eine einfache Möglichkeit, die Korrelation des ersten Bildpunktes zum zweiten Bildpunkt zu überprüfen, ist, die Grauwerte der beiden Bildpunkte zu vergleichen. Dabei wird davon ausgegangen, dass sich ein und derselbe Raumbereichspunkt sowohl im ersten als auch im zweiten Abbild mit demselben Grauwert (innerhalb gewisser Toleranzen) darstellt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:

Fig. 1    eine vereinfachte Darstellung einer erfindungsgemäßen Vorrichtung;

Fig. 2    eine schematische Darstellung der erfindungsgemäß genutzten geometrischen Zusammenhänge;

Fig. 3    eine schematische Darstellung zur Behandlung von Signalen, die von einem Retroreflektor reflektiert werden;

Fig. 4    eine Skizze zur Erläuterung einer bevorzugten Anwendung eines erfindungsgemäßen Verfahrens; und

Fig. 5    eine schematische Darstellung einer weiteren erfindungsgemäßen Vorrichtung.

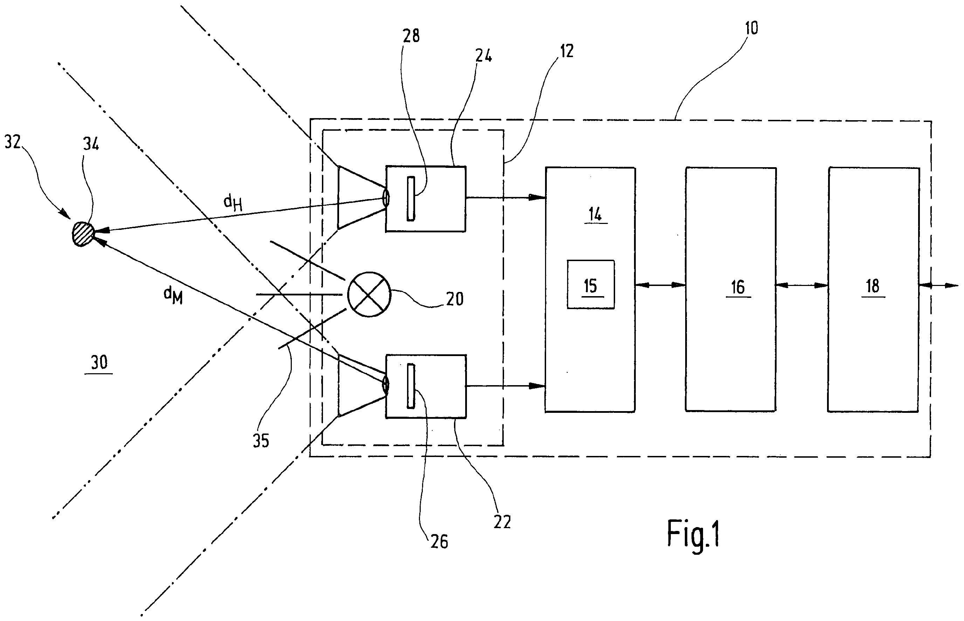

In Fig. 1 ist ein Ausführungsbeispiel einer erfindungsgemäßen Vorrichtung in seiner Gesamtheit mit der Bezugsziffer 10 bezeichnet.

Die Vorrichtung 10 beinhaltet einen Sensorteil 12, eine Auswerteeinheit 14 mit einer Prüfeinrichtung 15, eine Steuereinheit 16 und eine Verbindungseinheit 18. Der Sensorteil 12 weist eine Beleuchtungseinrichtung 20, eine erste Bildaufnahmeeinheit 22 und eine zweite Bildaufnahmeeinheit 24 auf. Die erste Bildaufnahmeeinheit 22 weist einen ersten Bildsensor 26 und die zweite Bildaufnahmeeinheit 24 weist einen zweiten Bildsensor 28 auf, wobei jeder Bildsensor 26, 28 eine Vielzahl von matrixartig zueinander angeordneten Bildpunkten besitzt. Außerdem besitzt jede Bildaufnahmeeinheit eine Abbildungsoptik, die einen optischen Erfassungsbereich definiert. Die beiden Erfassungsbereiche der ersten und zweiten Bildaufnahmeeinheit 22, 24 sind anhand von strichpunktierten Linien dargestellt, wobei ein gemeinsamer Erfassungsbereich 30, der sich aufgrund der Überlappung der einzelnen Erfassungsbereiche der beiden Bildaufnahmeeinheiten ergibt, mit einer strichdoppeltpunktierten Linie symbolisch dargestellt ist. Innerhalb des gemeinsamen Erfassungsbereichs 30 befindet sich ein Objekt 32, welches auf Grund seiner räumlichen Ausdehnung typischerweise auf mehrere Bildpunkte der Bildsensoren 26, 28 abgebildet wird. Um die Erläuterung des erfindungsgemäßen Vorgehens zu vereinfachen, wird nachfolgend lediglich ein Raumbereichspunkt 34 an dem Objekt 32 betrachtet.

Die Beleuchtungseinrichtung 20 sendet Licht aus und beleuchtet den vor dem Sensorteil 12 liegenden Raumbereich. Das mittels der drei durchgezogenen Linien angedeutete Licht 35 gelangt unter anderem zum Raumbereichspunkt 34 und wird von diesem reflektiert. Ein Teil des reflektierten Lichts gelangt zur ersten Bildaufnahmeeinheit 22 und ein weiterer Teil des Lichts zur zweiten Bildaufnahmeeinheit 24. Die erste und die zweite Bildaufnahmeeinheit 22, 24 sind jeweils dazu ausgebildet, die Laufzeit (Pulslaufzeit oder Phasenlaufzeit) des ausgesendeten und reflektierten Lichts zu ermitteln. Sie leiten die Ergebnisse der Laufzeitmessungen an die Auswerteeinheit 14 weiter. Hier wird dann aus den Laufzeiten ermittelt, welche Entfernung $d_H$, $d_M$ dem auf dem jeweiligen Bildsensor 26, 28 abgebildeten Raumbereichspunkt 34 zuzuordnen ist. (Es ist auch möglich, dass jeweils eine entsprechende Auswerteeinheit 14 in den Bildaufnahmeeinheiten 22, 24 integriert ist, so das die Bildaufnahmeeinheiten als sog. Abstandskameras ausgebildet sind und bereits einen Entfernungsmesswert $d_H$, $d_M$ liefern..) Es ergibt sich also ein erster Abstandswert $d_M$ für den Abstand zwischen der ersten Bildaufnahmeeinheit 22 und dem Raumbereichspunkt 34 und ein zweiter Abstandswert $d_H$ für den Abstand von der zweiten Bildaufnahmeeinheit 24 zum Raumbereichspunkt 34. Die ermittelten Abstandswerte $d_M$, $d_H$ werden von der Prüfeinrichtung 15 hinsichtlich ihrer Plausibilität überprüft, was im folgenden noch näher erläutert wird. Die Auswertung wird für alle Bildpunkte der Bildsensoren 26, 28 oder für einen Teil der Bildpunkte durchgeführt.

Das erhaltene Abstandsbild kann mit einem zuvor abgespeicherten Referenzabbild verglichen werden. In einem derartigen Referenzabbild kann ein Sollzustand hinterlegt sein, der Voraussetzung für die Freigabe der automatisiert arbeitenden Anlage ist. Ein solches Referenzabbild kann beispielsweise einmalig abgespeichert werden und bei Bedarf auch neu ermittelt werden. Zudem können innerhalb des Referenzabbildes ein oder mehrere Bereiche definiert werden, die nicht überwacht werden sollen, das heißt Änderungen in diesem Teil des Abbilds sind unbeachtlich und sollen die Sicherheitsfunktion nicht auslösen. Umgekehrt können auch genau die Bereiche spezifiziert werden, die überwacht werden sollen.

Das Ergebnis der Auswertung wird der Steuereinheit 16 übermittelt, die in Abhängigkeit von diesem Ergebnis eine Sicherheitsfunktion auslöst. Die Anbindung der Steuereinheit 16 an die - hier nicht dargestellte - automatisch arbeitende Anlage wird mittels der Verbindungseinheit 18 (beispielsweise mit Ausgangsschaltelementen oder einer Busankopplung) realisiert. Ergänzend sei darauf hingewiesen, dass die erste und zweite Bildaufnahmeeinheit 22, 24 zusätzlich auch Grauwerte des überwachten Raumbereichs erfassen können und somit zusätzliche Informationen für eine Auswertung der Abbilder zur Verfügung stehen. Es ist auch möglich, dass die Auswerteeinheit 14 und/oder die Steuereinheit 16 in separaten Baugruppen realisiert sind. Beispielsweise kann die Steuereinheit 16 eine sichere Steuereinheit sein, wie sie von der Anmelderin der vorliegenden Erfindung unter der Bezeichnung PSS ® vertrieben wird.

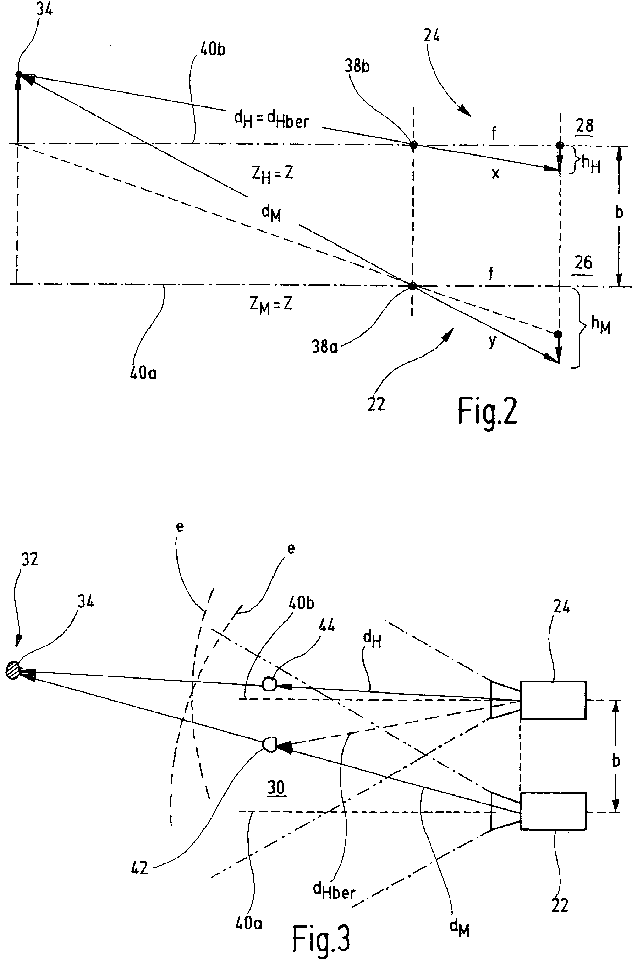

In Fig. 2 sind die optisch relevanten Geometrien der ersten und zweiten Bildaufnahmeeinheit 22, 24 dargestellt. Die Abbildungsoptiken der ersten und zweiten Bildaufnahmeeinheit 22, 24 haben jeweils eine Eintrittspupille 38a, 38b, eine optische Achse 40a, 40b und in diesem Fall die gleiche Brennweite f. Der Raumbereichspunkt 34 wird auf den ersten Bildsensor 26 mit einem Abstand $h_M$ von der optischen Achse 40a abgebildet. Bei der zweiten Bildaufnahmeeinheit 24 ist der entsprechende Abstand $h_H$. Die optischen Achsen 40a, 40b der ersten und zweiten Bildaufnahmeeinheit 22, 24 sind um eine definierte Basisweite b parallel zueinander versetzt. Die Abstände von den jeweiligen Eintrittspupillen 38a, 38b zum Raumbereichspunkt 34 sind hier mit $d_M$ und $d_H$ bezeichnet. Diese Abstandswerte $d_M$, $d_H$ werden mit Hilfe der Laufzeitmessung ermittelt und anschließend mit Hilfe eines auf Triangulation basierenden Ansatzes auf Plausibilität überprüft.

Der triangulationsbasierten Überprüfung liegen folgende Zusammenhänge zu Grunde. Zum einen ergibt sich aus dem Strahlensatz der folgende Zusammenhang:

$$\frac{z_M}{f} = \frac{d_M}{y} \quad \text{bzw.} \quad \frac{z_H}{f} = \frac{d_H}{x} \qquad (1)$$

wobei z den senkrechten Abstand zwischen der Bildaufnahmeeinheit und dem Raumpunkt 34 bezeichnet, d die Schrägentfernung zwischen der Eintrittspupille der Bildaufnahmeeinheit und dem Raumpunkt ist, f die Brennweite ist und y die Schrägentfernung zwischen der Eintrittspupille und dem Bildpunkt ist, auf den der Raumpunkt abgebildet wird. Durch Multiplikation mit der Brennweite f und Eliminieren der Variablen y durch Anwendung des Satzes von Pythagoras erhält man

$$z_M = f \cdot \frac{d_M}{y} = f \cdot \frac{d_M}{\sqrt{h_M^2 + f^2}} \qquad (2)$$

Vorteilhafterweise sind die beiden Bildaufnahmeeinheiten 22, 24 so ausgebildet, dass die optischen Achsen 40a, 40b senkrecht zu einer Ebene stehen, die parallel zu der Basisweite b steht. Daraus folgt dann, dass $z_M = z_H = z$ ist. Zum anderen ergibt sich aus der Grundgleichung der Triangulation folgender Zusammenhang:

$$\frac{z}{b} = \frac{f}{h_M - h_H} \quad \text{bzw.} \quad z = f \cdot \frac{b}{h_M - h_H} \qquad (3)$$

Durch Gleichsetzen der Gleichungen (2) und (3) und Auflösen nach $h_H$ ergibt sich

$$h_H = h_M - b \cdot \frac{\sqrt{h_M^2 + f^2}}{d_M} \qquad (4)$$

Es lässt sich nun aus den geometrischen Beziehungen ein Sollabstandswert $d_{Hber}$ berechnen, der mit dem aus der Laufzeit gemessenen Abstandswert $d_H$ übereinstimmen müsste. Aus Gleichung (1) und $z_M = z_H = z$ folgt der Zusammenhang:

$$\frac{d_{Hber}}{x} = \frac{d_M}{y} \qquad (5)$$

Nach Umstellen der Gleichung und zweimaliger Anwendung des Satzes von Pythagoras erhält man für den Sollabstandswert $d_{Hber}$

$$d_{Hber} = d_M \cdot \frac{\sqrt{h_H^2 + f^2}}{\sqrt{h_M^2 + f^2}} \qquad (6)$$

Dieser Zusammenhang wird für eine Plausibilitätsüberprüfung des gemessenen ersten Abstandswertes $d_H$ verwendet, indem der aus der Laufzeit bestimmte erste Abstandswert $d_H$ mit dem aus der geometrischen Beziehung und dem zweiten Abstandswert $d_M$ berechnete Abstandswert $d_{Hber}$ verglichen wird. Der gemessene erste Abstandswert $d_H$ und der berechnete Abstandswert $d_{Hber}$ müssen zumindest annähernd gleich sein. Andernfalls liegt eine Fehlmessung vor, wie sie beispielsweise in Fig. 3 dargestellt ist.

In Fig. 3 ist eine Situation dargestellt, bei der sich ein Objekt 32 mit einem Raumbereichspunkt 34 außerhalb der Eindeutigkeitsbereiche e der Bildaufnahmeeinheiten 22, 24 befindet. Der Eindeutigkeitsbereich e ist der Raumbereich vor jeder Bildaufnahmeeinheiten, in dem die Entfernung zu einem Objekt mit Hilfe der Laufzeitmessung eindeutig bestimmt werden kann. Der Eindeutigkeitsbereich ist durch die zeitliche Messperiode begrenzt, weil ein reflektierter Lichtstrahl immer nur der aktuellen Messperiode zugeordnet werden kann. Dies hat zur Folge, dass ein weit entferntes Objekt ein reflektiertes Lichtsignal erzeugen kann, das erst nach Ablauf der zugehörenden Messperiode und somit nach Aussenden eines weiteren Messsignals bei der Bildaufnahmeeinheit ankommt. Die Bildaufnahmeeinheit kann für sich genommen nicht erkennen, dass das reflektierte Lichtsignal von einem viel weiter entfernt liegenden Objekt stammt und sie liefert daher fälschlicherweise eine zu geringe Entfernung. Dies ist anhand Fig. 3 verdeutlicht.

In Fig. 3 ist ein Objekt 32 außerhalb der Eindeutigkeitsbereiche e angeordnet. Das vom Objekt 32 reflektierte Lichtsignal kommt aufgrund der großen Entfernung erst bei den Bildaufnahmeeinheiten 22, 24 an, wenn schon die nächste Messperiode gestartet wurde. Mittels der ersten Bildaufnahmeeinheit 22 wird daher ein erster Abstandswert $d_M$ zu einem ersten Scheinobjekt 42 und mittels der zweiten Bildaufnahmeeinheit 24 wird ein zweiter Abstandswert $d_H$ zu einem zweiten Scheinobjekt 44 ermittelt. Die Scheinobjekte 42, 44 sind real gar nicht vorhanden. Sie erscheinen nur aufgrund der Mehrdeutigkeit der Laufzeitmessung.

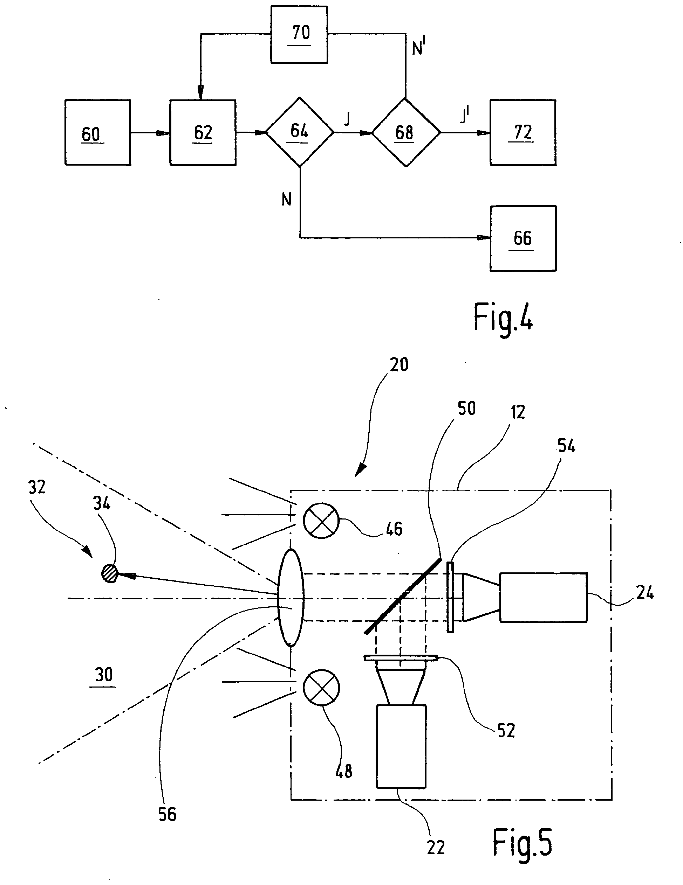

Wird nun aber der Sollabstandswert $d_{Hber}$ gemäß der Gleichung (6) errechnet, so weicht dieser Wert vom zweiten Abstandswert $d_H$ ab. Diese Abweichung könnte Ursache eines Funktionsfehlers der Vorrichtung 10 oder, wie angenommen, Ursache der Mehrdeutigkeit sein. Die Mehrdeutigkeit kann in einem Ausführungsbeispiel der Erfindung anhand eines iterativen Suchalgorithmus aufgelöst werden, bei dem die Plausibilitätsüberprüfung unter der Annahme wiederholt wird, dass die tatsächliche Entfernung des Objekts um ein ganzzahliges Vielfaches des Eindeutigkeitsbereichs größer ist als die zunächst aus der Laufzeitmessung bestimmte Entfernung. Eine solche Auflösung der Mehrdeutigkeit wird nun anhand der Fig. 4 erläutert.

In einem ersten Schritt 60 wird an der Bildpunktposition $h_M$ die Laufzeit gemessen und der entsprechende erste Abstandswert $d_M$ ermittelt. Im nachfolgenden Schritt 62 wird mittels der Gleichung (4) der korrespondierende Bildpunkt mit seiner Bildpunktposition $h_H$ ermittelt und der für diesen Bildpunkt zu erwartende Sollabstandswert $d_{Hber}$ berechnet. Im nächsten Schritt 64 wird überprüft, ob die Bildpunktpositionen $h_M$, $h_H$ - jeweils relativ bezogen auf die jeweilige optische Achse 40a, 40b - mindestens um einen bestimmten Wert differieren, insbesondere um mindestens einen halben Bildpunkt. Ist dies nicht der Fall, so erfolgt über den Pfad N eine Verzweigung. In einem Schritt 66 wird dann festgestellt, dass entweder ein Fehler im Kamerasystem vorliegt, oder der Raumbereichspunkt nicht im gemeinsamen Erfassungsbereich 30 liegt. Unterscheiden sich die Bildpunktpositionen $h_M$, $h_H$ ausreichend voneinander, so wird über den Pfad J zum Schritt 68 verzweigt. Hier wird iterativ überprüft, ob der sich Sollabstandswert $d_{Hber}$ möglicherweise als Summe des zweiten Abstandswerts $d_H$ und einem Vielfachen des Eindeutigkeitsbereichs $(d_H + n \cdot e)$ beschreiben lässt. Zusätzlich oder alternativ kann geprüft werden, ob die Grauwerte der Bildpunkte der ersten und der zweiten Bildaufnahmeeinheit 22, 24 gleich sind. Ist dies nicht der Fall, kann also keine Übereinstimmung gefunden werden, wird über den Pfad N' zum Schritt 70 verzweigt. Hier wird nun der erste Abstandswert $d_M$ um den Eindeutigkeitsbereich e inkrementiert. Das Verfahren wird dann mit dem Schritt 62 fortgesetzt, womit ein neuer Versuch gestartet wird, eine Übereinstimmung herzustellen. Wurde in Schritt 68 bereits eine Übereinstimmung festgestellt, so wird über den Pfad J' zum Schritt 72 verzweigt, wo die Plausibilität der Abstandsmessung festgestellt wird. Die gewonnene Abstandsinformation kann dann zur Erzeugung des Abbilds und dem Abgleich mit dem Referenzabbild verwendet werden.

Alternativ oder ergänzend ist es zur Auflösung von Mehrdeutigkeiten auch möglich, eine Beleuchtungseinrichtung 20 einzusetzen, die Licht mit unterschiedlichen Modulationsfrequenzen aussendet. Wird beispielsweise Licht mit einer ersten Frequenz von 15 MHz und einer zweiten Frequenz von 13 MHz ausgesendet, so ergeben sich verschiedene Eindeutigkeitsbereiche von 10 m beziehungsweise 11,5 m. Da das gemeinsame Vielfache dieser beiden Frequenzen erst in einer Entfernung von 230 m liegt, können Objekte in einer Entfernung bis zu 230 m eindeutige Abstandsinformationen zugeordnet werden.

In weiteren Ausführungsbeispielen wird zusätzlich zu der geschilderten Laufzeitmessung noch eine Abstandsbestimmung mittels eines stereoskopischen Verfahrens durchgeführt. Mit der so gewonnenen, diversitär redundanten Abstandsinformation, kann eine iterative Berechnung bei Objektabständen außerhalb des Eindeutigkeitsbereichs entfallen.

Ein weiteres Ausführungsbeispiel ist in der Fig. 5 dargestellt. Der hier gezeigte Sensorteil 12 weist eine Beleuchtungseinrichtung 20, eine erste Bildaufnahmeeinheit 22 und eine zweite Bildaufnahmeeinheit 24 auf. Die Beleuchtungseinrichtung 20 besteht hier aus einer ersten Lichtquelle 46 und einer zweiten Lichtquelle 48, wobei sich die Wellenlängen des jeweils ausgesendeten Lichts unterscheiden. Der Sensorteil 12 weist zudem einen Strahlteiler 50 auf. Außerdem sind in den Bildaufnahmeeinheiten 22, 24 ein erstes optisches Filterelement 52 beziehungsweise ein zweites optisches Filterelement 54 angeordnet. Die Durchlassfrequenzen der Filterelemente 52, 54 sind dabei so ausgelegt, dass die erste Bildaufnahmeeinheit 22 in erster Linie das von der ersten Lichtquelle 46 ausgesendete und reflektierte Licht empfängt, während die zweite Bildaufnahmeeinheit 24 in erster Linie das von der zweiten Lichtquelle 48 ausgesendete und reflektierte Licht empfängt. Der Vollständigkeit halber ist zudem eine Linse 56 dargestellt. Es handelt sich also um eine Anordnung mit zwei Kameras und zwei Lichtquellen mit unterschiedlichen Wellenlängen, wobei bei diesem Ausführungsbeispiel zudem unterschiedliche Modulationsfrequenzen verwendet werden. Der Strahlteiler 50 verteilt die ankommenden Lichtsignale auf die beiden Bildaufnahmeeinheiten 22, 24. Die optischen Filterelemente 52, 54 sperren die Lichtsignale für die jeweils andere Bildaufnahmeeinheit 24, 22. Dieses Ausführungsbeispiel ermöglicht eine direkte Zuordnung der Bildpunkte in der ersten und zweiten Bildaufnahmeeinheit 22, 24, auf denen derselbe Raumbereichspunkt 34 abgebildet wird. Außerdem sind der erste und zweite Abstandswert $d_M$, $d_H$ direkt miteinander vergleichbar. Potentielle Mehrdeutigkeiten können aufgrund der unterschiedlichen Modulationsfrequenzen aufgelöst werden. Da außerdem beide Kameras durch dieselbe Linse 56 schauen, entstehen keine Schatteneffekte.

Mögliche Einsatzgebiete der beschriebenen Vorrichtung beziehungsweise des beschriebenen Verfahrens ergeben sich überall dort, wo die einwandfreie Funktion einer abstandsmessenden Bildaufnahmeeinheit aufgrund sicherheitstechnischer Belange zwingend erforderlich ist. Dazu zählen unter anderem Systeme zur Überwachung von gefährlichen Maschinen und Anlagen, Systeme zur Überwachung von wertvollen Gütern (Objektschutz, Zugangssicherungen, Tresorraumüberwachungen, etc.) und auch Systeme im Bereich der Qualitätskontrolle und Qualitätssicherung.

**Patentansprüche**

1. Vorrichtung zum Überwachen eines Raumbereichs (30), insbesondere zum Absichern eines Gefahrenbereichs einer automatisiert arbeitenden Anlage, mit einer Beleuchtungseinrichtung (20;46, 48), die zumindest temporär Lichtsignale (35) in den Raumbereich (30) aussendet, mit einer ersten Bildaufnahmeeinheit (22) zum Aufnehmen von zumindest einem ersten Abbild des Raumbereichs (30), wobei die Bildaufnahmeeinheit (22) einen Bildsensor (26) mit einer Vielzahl von Bildpunkten besitzt, die eine Vielzahl von Raumbereichspunkten (34) abbilden, mit einer Auswerteeinheit (14), die dazu ausgebildet ist, mittels Laufzeitmessung einen Abstandswert $(d_M)$ für zumindest einen der Raumbereichspunkte (34) zu bestimmen, mit einer Steuereinheit (16), die in Abhängigkeit von dem Abstandswert $(d_M)$ eine Sicherheitsfunktion auslöst, und mit einer Prüfeinrichtung (15), die dazu ausgebildet ist, mindestens ein erstes und ein zweites Abbild miteinander zu vergleichen, um einen fehlerhaften Abstandswert ($d_M$) zu erkennen, **gekennzeichnet durch** eine zweite Bildaufnahmeeinheit (24) zur Erzeugung des zweiten Abbilds, wobei die Prüfeinrichtung für alle oder für einen Teil der aufgenommenen Raumbereichspunkte ermittelt, ob der im ersten Abbild für den jeweiligen Raumbereichspunkt ermittelte erste Abstandswert mit einem anhand des zweiten Abbildes ermittelten zweiten Abstandswert für denselben Raumbereichspunkt innerhalb eines vorgegebenen Toleranzbereichs übereinstimmt.

2. Vorrichtung nach Anspruch 1, **dadurch gekennzeichnet, dass** die Prüfeinrichtung (15) zum Korrigieren eines fehlerhaften Abstandswerts ($d_M$) und/oder zum Generieren eines Fehlersignals ausgebildet ist.

3. Vorrichtung nach Anspruch 1 oder 2, **gekennzeichnet durch** eine Modulationseinrichtung, die dazu ausgebildet ist, die Lichtsignale (35) mit einer ersten und zumindest einer davon verschiedenen zweiten Modulationsfrequenz zu modulieren.

4. Vorrichtung nach einem der Ansprüche 1 bis 3, **dadurch gekennzeichnet, dass** die erste und die zweite Bildaufnahmeeinheit (22,24) um eine definierte Basisweite (b) parallel zueinander versetzt sind, insbesondere zur Erzeugung von stereoskopischen Abbildern.

5. Vorrichtung nach einem der Ansprüche 1 bis 4, **gekennzeichnet durch** mindestens einen Strahlteiler (50) zum Aufteilen der von dem Raumbereichspunkt (34) reflektierten Lichtsignale an die erste und zweite Bildaufnahmeeinheit (22, 24).

6. Vorrichtung nach einem der Ansprüche 1 bis 5, **dadurch gekennzeichnet, dass** die Beleuchtungseinrichtung (46, 48) zum Aussenden von Licht mit mindestens zwei Wellenlängen ausgebildet ist, dass der ersten Bildaufnahmeeinheit (22) ein erstes optisches Filterelement (52) mit einer ersten Durchlasswellenlänge und der zweiten Bildaufnahmeeinheit (24) ein zweites optisches Filterelement (54) mit einer zweiten Durchlasswellenlänge zugeordnet ist, wobei die erste Durchlasswellenlänge im Wesentlichen der ersten Wellenlänge des ausgesendeten Lichts und die zweite Durchlasswellenlänge im Wesentlichen der zweiten Wellenlänge des ausgesendeten Lichts entspricht.

7. Verfahren zum Überwachen eines Raumbereichs, insbesondere zum Absichern eines Gefahrenbereichs einer automatisiert arbeitenden Anlage, wobei eine Beleuchtungseinrichtung (20; 46, 48) zumindest temporär Lichtsignale in den Raumbereich aussendet, eine Bildaufnahmeeinheit (22) mit einem Bildsensor (26) mit einer Vielzahl von Bildpunkten ein Abbild des Raumbereichs aufnimmt, mittels Laufzeitmessung ein Abstandswert ($d_M$) für mindestens einen im Raumbereich befindlichen Raumbereichspunkt (34) bestimmt und in Abhängigkeit von dem Abstandswert ($d_M$) eine Sicherheitsfunktion ausgelöst wird, wobei mindestens ein erstes und ein zweites Abbild aufgenommen und verglichen werden, um einen fehlerhaften Abstandswert ($d_M$) zu erkennen, **dadurch gekennzeichnet, dass** das erste Abbild von einer ersten Bildaufnahmeeinheit (22) und das zweite Abbild von einer zweiten Bildaufnahmeeinheit (24) aufgenommen wird, wobei für alle oder für einen Teil der aufgenommenen Raumbereichspunkte ermittelt wird, ob der im ersten Abbild für den jeweiligen Raumbereichspunkt ermittelte erste Abstandswert mit einem anhand des zweiten Abbildes ermittelten zweiten Abstandswert für denselben Raumbereichspunkt innerhalb eines vorgegebenen Toleranzbereichs übereinstimmt.

8. Verfahren nach Anspruch 7, **dadurch gekennzeichnet, dass** beim Erkennen eines fehlerhaften Abstandswerts ($d_M$) ein korrigierter Abstandswert ($d_M$) und/oder ein Fehlersignal generiert wird.

9. Verfahren nach einem der Ansprüche 7 oder 8, **dadurch gekennzeichnet, dass** das erste Abbild beim Aussenden von Licht mit einer ersten Modulationsfrequenz und das zweite Abbild beim Aussenden von Licht mit einer zweiten Modulationsfrequenz aufgenommen wird.

10. Verfahren nach einem der Ansprüche 7 bis 9, **dadurch gekennzeichnet, dass** für mindestens einen ersten Bildpunkt der ersten Bildaufnahmeeinheit (22) und einen zweiten Bildpunkt der zweiten Bildaufnahmeeinheit (24) Grauwerte aufgenommen und verglichen werden.

11. Verfahren nach einem der Ansprüche 7 bis 10, **dadurch gekennzeichnet, dass** überprüft wird, ob sich für den mindestens einen Raumbereichspunkt übereinstimmende Abstandswerte ergeben, wenn dieser Raumbereichspunkt um eine Entfernung, die dem Eindeutigkeitsbereich der Laufzeitmessung entspricht, weiter entfernt angenommen wird.

**Claims**

1. An apparatus for monitoring a spatial area (30), in particular for safeguarding of a hazardous area of an automatically operated installation, comprising an illumination device (20; 46, 48) which at least temporarily emits light signals (35) into the spatial area (30), comprising a first image recording unit (22) for recording at least one first image of the spatial area (30), with the image recording unit (22) comprising an image sensor (26) having a plurality of pixels for imaging a plurality of spatial area points (34), comprising an evaluation unit (14) designed to determine a distance value ($d_M$) for at least one of the spatial area points (34) by means of a propagation time measurement, comprising a control unit (16) which initiates a safety function depending on the distance value ($d_M$), and comprising a test device (15) designed to compare at least one first and one second image with one another, in order to identify an incorrect distance value ($d_M$), **characterized by** a second image recording unit (24) for producing the second image, with the test device determining for all or for some of the recorded spatial area points whether the first distance value determined from the first image for the respective spatial area point matches a second distance value determined on the basis of the second image for the same spatial area point within a predetermined tolerance band.

2. The apparatus of claim 1, **characterized in that** the test device (15) is designed to correct an incorrect distance value ($d_M$) and/or to generate a fault signal.

3. The apparatus of claim 1 or 2, **characterized by** a modulation device designed to modulate the light signals (35) using a first modulation frequency and using at least one second modulation frequency which is different from the first modulation frequency.

4. The apparatus of one of claims 1 to 3, **characterized in that** the first and the second image recording unit (22, 24) are arranged parallel to one another and spaced apart by a defined base width (b), in particular in order to produce stereoscopic images.

5. The apparatus of one of claims 1 to 4, **characterized by** at least one beam splitter (50) for splitting the light signals reflected from the spatial area point (34) between the first and the second image recording unit (22, 24).

6. The apparatus of one of claims 1 to 5, **characterized in that** the illumination device (46, 48) is designed to emit light at at least two different wavelengths, the first image recording unit (22) being associated with a first optical filter element (52) having a first pass wavelength, and the second image recording unit (24) being associated with a second optical filter element (54) having a second pass wavelength, wherein the first pass wavelength essentially corresponds to the first wavelength of the emitted light, and the second pass wavelength essentially corresponds to the second wavelength of the emitted light.

7. A method for monitoring a spatial area, in particular for safeguarding a hazardous area of an automatically operated installation, wherein an illumination device (20; 46, 48) at least temporarily emits light signals into the spatial area, wherein an image recording unit (22) comprising an image sensor (26) having a plurality of pixels records an image of the spatial area, wherein a distance value ($d_M$) for at least one spatial area point (34) which is located in the spatial area is determined by means of a propagation time measurement and a safety function is initiated depending on the distance value ($d_M$), wherein at least one first and one second image are recorded and compared in order to identify an incorrect distance value ($d_M$), **characterized in that** the first image is recorded by a first image recording unit (22) and the second image is recorded by a second image recording unit (24), wherein for all or for some of the recorded spatial area points it is determined whether the first distance value determined from the first image for the respective spatial area point matches a second distance value determined on the basis of the second image for the same spatial area point within a predetermined tolerance band.

8. The method of claim 7, **characterized in that** a corrected distance value ($d_M$) and/or a fault signal are generated, when an incorrect distance value ($d_M$) is identified.

9. The method of one of claims 7 or 8, **characterized in that** the first image is recorded on emission of light at a first modulation frequency, and the second image is recorded on emission of light at a second modulation frequency.

10. The method of one of claims 7 to 9, **characterized in that** gray-scale values are recorded and compared for at least one first pixel of the first image recording unit (22), and a second pixel of the second image recording unit (24).

11. The method of one of claims 7 to 10, **characterized by** checking whether there are matching distance values for the at least one spatial area point when said spatial area point is assumed to be located further away by a distance which corresponds to the unambiguity range of the propagation time measurement.

**Revendications**

1. Arrangement pour surveiller une zone d'espace (30), notamment pour sécuriser une zone de danger d'une installation au fonctionnement automatisé, comprenant un dispositif d'éclairage (20 ; 46, 48) qui émet au moins temporairement des signaux lumineux (35) dans la zone d'espace (30), comprenant une première unité d'enregistrement d'images (22) destinée à enregistrer au moins une première représentation de la zone d'espace (30), l'unité d'enregistrement d'images (22) possédant un capteur d'image (26) doté d'une pluralité de pixels, lesquels représentent une pluralité de points de zone d'espace (34), comprenant une unité d'interprétation (14) qui est configurée pour déterminer, au moyen d'une mesure du temps de propagation, une valeur d'écart ($d_M$) pour au moins l'un des points de zone d'espace (34), comprenant une unité de commande (16) qui déclenche une fonction de sécurité en fonction de la valeur d'écart ($d_M$), et comprenant un dispositif de contrôle (15) qui est configuré pour comparer entre elles au moins une première et une deuxième représentation afin de reconnaître une valeur d'écart ($d_M$) erronée, **caractérisé par** une deuxième unité d'enregistrement d'images (24) destinée à générer la deuxième représentation, le dispositif de contrôle déterminant pour la totalité ou pour une partie des points de zone d'espace enregistrés si la première valeur d'écart, déterminée dans la première représentation pour le point de zone d'espace respectif, coïncide avec une deuxième valeur d'écart déterminée à l'aide de la deuxième représentation pour le même point de zone d'espace à l'intérieur d'une plage de tolérance prédéfinie.

2. Arrangement selon la revendication 1, **caractérisé en ce que** le dispositif de contrôle (15) est conçu pour corriger une valeur d'écart ($d_M$) erronée et/ou pour générer un signal d'erreur.

3. Arrangement selon la revendication 1 ou 2, **caractérisé par** un dispositif de modulation qui est conçu pour moduler les signaux lumineux (35) avec une première fréquence de modulation et au moins une deuxième différente de celle-ci.

4. Arrangement selon l'une des revendications 1 à 3, **caractérisé en ce que** la première et la deuxième unité d'enregistrement d'images (22, 24) sont décalées parallèlement l'une par rapport à l'autre d'une largeur de base (b) définie, notamment en vue de générer des représentations stéréoscopiques.

5. Arrangement selon l'une des revendications 1 à 4, **caractérisé par** au moins un séparateur de faisceau (50) destiné à répartir les signaux lumineux réfléchis par le point de zone d'espace (34) sur la première et la deuxième unité d'enregistrement d'images (22, 24).

6. Arrangement selon l'une des revendications 1 à 5, **caractérisé en ce que** le dispositif d'éclairage (46, 48) est configuré pour émettre de la lumière avec au moins deux longueurs d'onde, **en ce qu'**à la première

re unité d'enregistrement d'images (22) est associé un premier élément filtrant optique (52) ayant une première longueur d'onde de passage et à la deuxième unité d'enregistrement d'images (24) est associé un deuxième élément filtrant optique (54) ayant une deuxième longueur d'onde de passage, la première longueur d'onde de passage correspondant sensiblement à la première longueur d'onde de la lumière émise et la deuxième longueur d'onde de passage sensiblement à la deuxième longueur d'onde de la lumière émise.

7. Procédé pour surveiller une zone d'espace, notamment pour sécuriser une zone de danger d'une installation au fonctionnement automatisé, un dispositif d'éclairage (20 ; 46, 48) émettant au moins temporairement des signaux lumineux dans la zone d'espace, une unité d'enregistrement d'images (22) pourvue d'un capteur d'image (26) doté d'une pluralité de pixels enregistrant une représentation de la zone d'espace, une valeur d'écart ($d_M$) pour au moins un point de zone d'espace (34) qui se trouve dans la zone d'espace étant déterminée au moyen d'une mesure du temps de propagation et une fonction de sécurité étant déclenchée en fonction de la valeur d'écart ($d_M$), au moins une première et une deuxième représentation étant enregistrées et comparées afin de reconnaître une valeur d'écart ($d_M$) erronée, **caractérisé en ce que** la première représentation est enregistrée par une première unité d'enregistrement d'images (22) et la deuxième représentation par une deuxième unité d'enregistrement d'images (24), une détermination étant effectuée, pour la totalité ou pour une partie des points de zone d'espace enregistrés, en vue de vérifier si la première valeur d'écart, déterminée dans la première représentation pour le point de zone d'espace respectif, coïncide avec une deuxième valeur d'écart déterminée à l'aide de la deuxième représentation pour le même point de zone d'espace à l'intérieur d'une plage de tolérance prédéfinie.

8. Procédé selon la revendication 7, **caractérisé en ce qu'**en cas de reconnaissance d'une valeur d'écart ($d_M$) erronée, une valeur d'écart ($d_M$) corrigée et/ou un signal d'erreur sont générés.

9. Procédé selon l'une des revendications 7 ou 8, **caractérisé en ce que** la première représentation est enregistrée lors de l'émission de la lumière avec une première fréquence de modulation et la deuxième représentation lors de l'émission de la lumière avec une deuxième fréquence de modulation.

10. Procédé selon l'une des revendications 7 à 9, **caractérisé en ce que** les niveaux de gris sont enregistrés et comparés pour au moins un premier pixel de la première unité d'enregistrement d'images (22) et un deuxième pixel de la deuxième unité d'enregistrement d'images (24).

11. Procédé selon l'une des revendications 7 à 10, **caractérisé en ce qu'**un contrôle est effectué en vue de vérifier si des valeurs d'écart coïncidentes sont obtenues pour l'au moins un point de zone d'espace lorsque ce point de zone d'espace est supposé se trouver plus loin à une distance qui correspond à la plage d'unicité de la mesure du temps de propagation.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1544535 A1
- DE 19938639 A1
- DE 10033608 A1
- WO 9934235 A
- WO 2004029502 A1
- DE 4217423 A1
- EP 1065522 B1
- WO 2004055544 A1
- DE 10238075 A1
- EP 0885782 A1
- US 4716430 A